(19)

Europäisches
Patentamt
European
Patent Office
Office européen
des brevets

(11)    **EP 1 486 799 B1**

(12)    **EUROPEAN PATENT SPECIFICATION**

(45) Date of publication and mention
of the grant of the patent:
**06.10.2010  Bulletin 2010/40**

(51) Int Cl.:
***G01S 17/89*** *(2006.01)*        ***G01S 17/88*** *(2006.01)*
***G01S 7/48*** *(2006.01)*        ***G01N 21/55*** *(2006.01)*

(21) Application number: **04102510.7**

(22) Date of filing: **04.06.2004**

(54) **Method and apparatus for determining condition of road markings**

Verfahren und Anordnung zur Bestimmung des Zustandes von Fahrbahnmarkierungen

Méthode et appareil pour déterminer la condition de marquages routiers

(84) Designated Contracting States:
**DK EE FI SE**
Designated Extension States:
**LT LV**

(30) Priority: **10.06.2003  FI 20030863**

(43) Date of publication of application:
**15.12.2004  Bulletin 2004/51**

(73) Proprietor: **Destia Oy**
**00520 Helsinki (FI)**

(72) Inventor: **Kotilainen, Kari**
**33820 Tampere (FI)**

(74) Representative: **Tanskanen, Jarmo Tapio**
**Papula Oy**
**Mechelininkatu 1 a**
**00180 Helsinki (FI)**

(56) References cited:
**GB-A- 2 372 314     US-A- 4 373 819**
**US-A- 4 721 389     US-B1- 6 407 674**

**Description**

BACKGROUND OF THE INVENTION

The invention relates to a method for determining the condition of road markings, in which method the road marking is measured at several points and the retroreflection of the road marking is determined.

The invention also relates to an apparatus for determining the condition of road markings, the apparatus comprising an illuminator, a sensor comprising several adjacent detectors, means for controlling the illuminator, and a data processing and controlling unit with calculation means for determining the retroreflection of the road marking.

The invention further relates to a computer program product for controlling a data processing device in response to executing a program code of the computer program product in the processor of the data processing device.

Road markings refer to markings that are made with paint or a mass on the surface of a roadway. These include lane lines dividing the roadway, such as the centre line, border lines, line prohibiting passing, and various small markings, such as pedestrian crossings, turning arrows, and yellow prohibitory areas. Road markings are intended for direction and guidance to the users of the road.

Road markings wear off mainly due to wear caused by traffic. During winter, the wear caused by studded tyres and winter maintenance is especially high. During spring, the condition of road markings is often clearly worse and, in addition, the markings are in places covered by sand from sanding and dust from the road.

The condition of road markings can be determined by visual examination. In visual examination, the condition is the subjective view of the examiner, wherefore mistakes may occur in the evaluation of the condition. The retroreflection of road markings can be measured with portable measuring instruments, for instance. The use of such portable measuring instruments is difficult and even dangerous especially on busy roads.

US patent 6,407,674 and US publication 2002/0063638 disclose the measurement of the retroreflection of road markings. The apparatus comprises a light source and a sensor and processing means for controlling the light source and sensor and for processing information. The sensor typically has 5 to 10 light diodes. The apparatus is mounted on a vehicle and the location of the vehicle can be determined by GPS positioning, for instance.

GB publication 2,372,314 discloses an apparatus for measuring the contrast between road markings and the roadway. The apparatus comprises a laser measuring instrument for measuring the distance to the measuring point. The apparatus further comprises a digital camera that eliminates luminance from everywhere else than the light source. A digital image is produced with the digital camera and processed using a program that determines the luminance of the road marking. The luminance of the road marking is compared with the background luminance and the contrast between the road marking and background is determined.

US patent 4,721,389 discloses the measurement of the retroreflection of road markings. The apparatus illuminates a reflecting surface with a laser beam. The reflected laser beam is received through a narrowband optic filter, whereby only the wavelength of the laser beam reaches a sensor.

BRIEF DESCRIPTION OF THE INVENTION

It is an object of the present invention to provide a novel and improved method and apparatus for determining the condition of road markings.

The method of the invention is characterized by the features of claim 1.

Further, the apparatus of the invention is characterized by the features of claim 8.

Yet further, the computer program product of the invention is characterized by the features of claim 13.

The essential idea of the invention is that the retroreflection and remaining surface area of a road marking is measured with a measuring instrument. The idea of one embodiment is that a digital image is produced of the road marking, and the location of the road marking is identified in the i m-age, and the width, remaining surface area, and retroreflection of the road marking is calculated. The idea of another embodiment is that a test value is measured for surface area measurement from the image at the road coating, for example an asphalt coating, and it is compared with the values inside the road marking. If one of the values inside the road marking is close to the values of the road coating, it indicates a worn spot in the road marking. The portions of the worn spots are summed, whereby the proportion of the surface area of the worn spots can be calculated from the image either as surface area or for instance a percentage of the original road marking.

The invention provides the advantage that the condition of road markings can be determined quickly and reliably. An especially advantageous feature is that it is possible to determine both the retroreflection and the remaining surface area of the road marking definitely and reliably. When mounted on a vehicle, the apparatus is significantly safer than when the condition of the road marking is measured manually. The operating costs of the apparatus are reasonably low. It is also possible to perform both inventory measurements and quality assurance measurements with one and the same apparatus. The apparatus of the invention is also inexpensive in comparison with the existing apparatuses.

BRIEF DESCRIPTION OF THE FIGURES

The invention will be described in greater detail in the attached drawings, in which

Figure 1 is a schematic view of an apparatus for determining the condition of road markings,
Figure 2 is a schematic view of a descriptor of the measuring result of a road marking,
Figure 3 shows the descriptor of Figure 2 after it has been filtered, and
Figure 4 is a flow chart of a method for determining the condition of a road marking.

DETAILED DESCRIPTION OF THE INVENTION

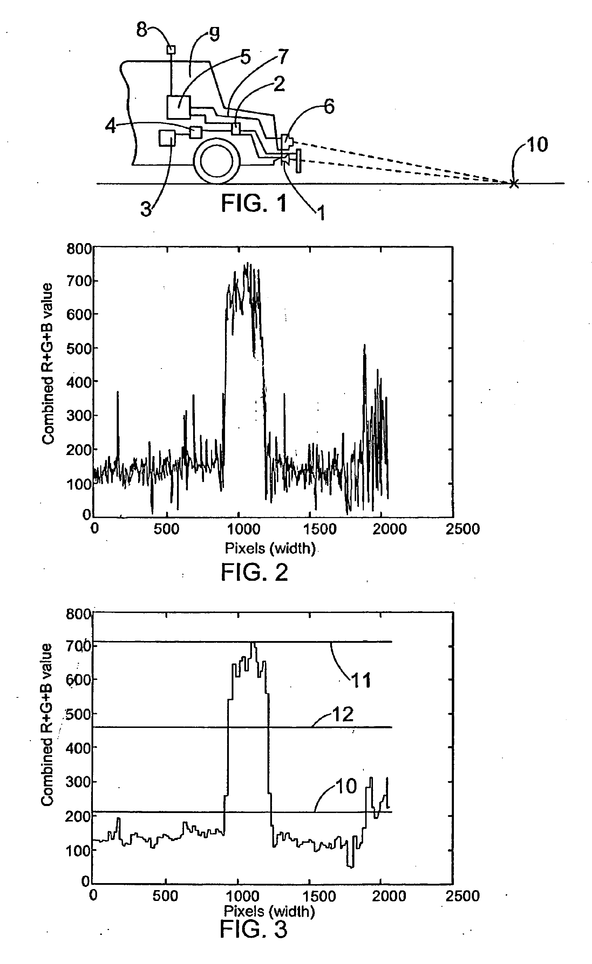

Figure 1 shows an illuminator 1. The illuminator is switched on and off with a control relay 2. A voltage source 3 provides voltage to the illuminator 1. The voltage source 3 can be a 12-V vehicle battery. The voltage source 3 supplies voltage through a voltage equalizer 4 that ensures an even voltage supply to the illuminator 1, whereby the luminosity of the illuminator 1 remains substantially constant.

The apparatus further comprises a data processing and control unit 5. The data processing and control unit 5 controls the control relay 2, for i nstance, which switches the illuminator 1 on and off. The apparatus may also contain a shutter 11. The shutter 11 can for instance be a flap turning on a lever, in which case the lever of the flap is turned with an actuator. Further, the shutter 11 can be a round shutter plate having a hole that is turned in front of the illuminator 1 when the illuminator 1 is to illuminate. The plate is turned with an actuator. By means of the shutter 11, the measuring rate of the apparatus can be made higher than when the illuminator is only controlled with the relay 2 that switches it on and off. Close to the illuminator 1, there is a digital camera 6 that produces an image of the measuring point 10. The illuminator 1 and digital camera 6 are installed and directed in relation to the measuring point 10 such that the measuring geometry of retroreflection corresponds to that defined in a standard. For instance, a measuring event defined in standard SFS-EN 1436 models seeing at a distance of 30 metres from a passenger car, wherein the eyes of the driver are at a height of 1.2 metres and the headlights of the veh i-cle at a height of 0.65 metres.

The digital camera 6 is connected to the data processing and control unit 5 over a data transmission bus 7. In addition to measurement and control data, electric supply to the digital camera 6 can also be arranged through the same cable.

The apparatus further comprises a GPS locator 8, by means of which the apparatus can be positioned. The apparatuses are arranged in a vehicle 9, whereby the condition of road markings can be determined from the vehicle 9. If desired, the measurements can be made in a moving vehicle 9.

The light source should be a standard illuminator A defined in the ISO/CIE10526 standard. The colour temperature of the standard illuminator A is 2,856 kelvin. The colour temperature of a halogen light source, for instance, is close to this colour temperature. The illuminator 1 can for instance be an additional long-distance light of a car and comprise a 100 W halogen bulb. The voltage source 3 can for instance be the battery of the vehicle 9. The voltage supplied by the battery may vary by several volts depending on the number of revolutions of the motor. Thus, the voltage should preferably be equalized with a voltage equalizer 4 operating with a 9 to 16-V supply voltage, for instance, and providing a 12-V voltage. The voltage provided by the voltage equalizer can preferably be adjusted 10% up or down, for example. The voltage range of the value adjusted by the voltage equalizer should preferably be as small as possible, because voltage variation typically affects substantially the luminosity provided by the illuminator 1. The voltage range is preferably below +- 1 %, for instance.

The data processing and control unit 5 contains at least a memory circuit comprising a computer program for controlling the apparatus and a memory means for storing information. The data processing and control unit 5 further comprises a processor controlled by a computer program to perform the desired actions. The apparatus can be controlled, and the measuring results stored and/or displayed with a computer program code executed in the processor of the data processing and control unit, the program code being loadable from the internal memory of the apparatus. The computer program code can be transferred to the apparatus from a separate external memory means, such as disk or CD-ROM. It can also be transferred through a telecommunications network, for instance by connecting the apparatus through a wireless access network to the Internet. It is also possible to use a hardware solution or a hardware and software combination. The data processing and control unit 5 can for instance be a portable computer with a keyboard and display and having sufficient processing and memory capacity. The data processing and control unit 5 should also have a sufficient number of access ports.

The digital camera 6 can for instance be a colour digital camera with a CMOS cell and a maximum image size of 1,012 * 1,280 pixels. The digital camera 6 can also be equipped with a CCD cell. If desired, the camera can also be a line camera, the image cell of which has only one row of pixel wells.

The illuminator 1 and digital camera 6 should be fastened to the front part of the vehicle 9 as firmly as possible. The illumination field of the illuminator 1 should be directed so as not to unreasonably disturb other road users. The front lens of the illuminator should be easily cleanable. The fastening mount of the digital camera 6 preferably has vertical elevation control and tilt angle adjustment. This way, the measuring geometry can be adjusted as necessary.

Retroreflection is a coefficient indicating how much the illuminance directed to a reflective surface increases the luminance detected from the surface. Retroreflection is thus the value of the luminance increase produced by a light source divided by the illuminance of the light source. Thus, if the change of luminance caused on the surface by the light source can be reliably determined at a specific change of illuminance, retroreflection can also be measured in daylight and not only in the dark. The luminance caused by daylight on the surface is deducted from the luminance produced by additional light. Retroreflection is obtained by dividing the difference in luminances by the illuminance produced by the illuminator on the measuring point.

A digital camera is a camera that stores an image in digital format. Instead of a film, the camera has a semiconductor cell. The cell has typically approximately 0.5 to 6 million light-sensitive points, i.e. pixel wells. Light arriving at each pixel well changes into an electric charge in the cell. The size of this electric charge indicates how much light the pixel cell in question has received. The size of the electric charge is converted into a numerical value. The numerical value is generally stored into the memory of the camera in a series of eight bits, for instance. In an eight-bit image, the size of the charge usually obtains a value within 0 to 255. In a black-and-white camera, pixel value 0 is completely black and 255 white. The values between these two values are different shades of grey.

In colour cameras, the pixel wells of the cell are divided to distinguish three different colours. Typically, some of the pixel wells distinguish red light, some green, and the rest blue. On the basis of the received information, the camera interpolates a numerical value for red, green and blue light for each pixel well and combines them into a three-layer image matrix.

In most cases, in camera 1, a pixel well on the cell corresponds to a pixel in the image. The numerical value of the pixel shows the amount of light arrived at the pixel on the wavelength region that the pixel detects.

Pixel wells measure the amount of light in different wavelength regions of light. According to the three-colour theory, the wavelength regions are red 500 to 700 nanometres (R), green 450 to 650 nanometres (G) and blue 400 to 500 nanometres (B). The amount of light arriving at the image cell is limited by adjusting the time of exposure and the size of the objective aperture. If the time of exposure is halved, the amount of light arriving at the cell is also halved. When the aperture is decreased in half, the amount of arriving light is also halved. The amount of light can thus be estimated from the r, g, and b values and from the time of exposure and aperture size.

The data processing and control unit 5 has an image interpretation program that identifies the road marking from the image. The identification is based on the difference in the luminance of the marking and the surroundings. At the road marking, the red, green, and blue values of the pixels are higher than at the asphalt. When interpreting the image, the red r, green g, and blue b values are read across the image on one pixel row in the middle of the image. From these values, it is possible to draw a descriptor in which R, G, and B all have curves of their own. This descriptor shows the leap of the R, G, and B values when the asphalt changes into a road marking. On the basis of one row, it is possible to determine the location of the edge of the road marking on the row. When the location of the marking in the image needs to be known, identification is done on several image pixel rows.

Figure 2 shows a descriptor of the measuring result of a road marking. In the descriptor of Figure 2, the R, G, and B values of the measuring result are summed. Each value R, G, and B thus varies between 0 and 255.

After this, the measuring result of Figure 2 is filtered in such a manner that, starting from the left side of the pixel row, an average is calculated for each set of 20 pixels. This way, single high and low peaks are eliminated from the descriptor of the pixel row, and large variations on the curve are evened out. The thus filtered descriptor is shown in Figure 3. Filtering can also be performed in some other suitable manner. Suitable solutions include the use of a floating average or monitoring the change in the angle coefficient of the curve. An average is calculated of the values of the obtained row from the entire row, which in Figure 3 is shown by line 10. In the case of Figure 3, the numerical value of the average is 212.

Further, a maximum value, marked with line 11 in Figure 3 and having a numerical value of 704, is searched from the row. An intermediate value, marked with line 12 in Figure 3 and having a numerical value of 456, is found between the average and maximum values. An edge point of the road marking is found by means of the intermediate value's numerical value. In the case of Figure 3, numerical value 458 is searched starting from the left side of the pixel row. The left edge of the road marking is where numerical value 458 is exceeded. The value of the pixel column indicates the current location. The same is done starting from the right side. When a sufficient number of right and left edge points are found on different pixel rows in the image, it is possible to calculate regression lines for the left and right edge of the road marking by using the edge points. The location of the road marking in the image is defined by the image coordinates of the end points of these lines.

When the location of the road marking in the image is known, it is possible to compare the brightness of the pixels inside the regression lines with the brightness of the outside pixels. If the brightness corresponds to the brightness on the outside, the road marking has worn off at the pixel. When the number of examined pixels and the number of poor pixels is calculated, it is possible to calculate the percentage of the road marking wear. A worn spot can also be defined as a spot where, between the right and left edge of the road marking, the value of the pixels is lower than the average 10.

The number of pixels corresponding to a certain distance in the road marking depends on the measuring geometry and the structure of the camera. The correspondence between the number of pixels and the measurements can be calibrated with a measuring tape or measuring pieces.

For image measurement calibration, a measuring tape can for instance be shown against a known coordinate system. The plane of the image and target is set to be as parallel as possible. Distances to known targets are calculated in the images, and on the basis of the pixel distances of the image coordinate system, a camera standard is calculated for the camera objective. The linearity of the cross-direction of the image and an elevation measurement made in the vertical direction can also be examined.

Camera 6 is also calibrated for luminance measurement. An image is produced of an illuminated target with the camera, and the luminance of the target is measured with an accurate luminance gauge. The photographing is repeated at different luminance values of the target and with different times of exposure. Approximately 20 pixels can be selected from the measuring points of the figure to calculate an average for the R, G, and B values of the measuring point. This produces the luminance (cd/m$^2$) of the measuring point as well as the r, g, and b values and time of exposure. The r, g, and b values obtained from the camera can be converted into a luminance value in such a manner that the r, g, and b values are multiplied by coefficients Ar, Ag, Ab and summed. The formula is

$$L = Ar*R+Ag*G+Ab*B, \qquad\qquad (1)$$

wherein

    Ar, Ag, and Ab are correction coefficients,
    R, G, and B are r, g, and b values produced by the camera, and
    L is luminance.

Correction coefficients Ar, Ag, and Ab can be defined for instance by utilizing the principle of the smallest square sum. The calculated luminance values are compared with the measured values and a square sum is calculated from the difference between the measured and calculated values. When the square sum is at its smallest, the error is at its smallest and the coefficients at the most accurate. Luminance is first determined with a specific time of exposure. When the luminance at a specific time of exposure is known, the luminance of images produced with other times of exposure can be roughly calculated from the ratio of the times of exposure. Naturally, a person skilled in the art can also define the correction coefficients with some other solution known per se. The camera calibration is renewed when the method of exposure and/or image size is changed.

Both an imaging program and an image interpreting program are used in the imaging event. The imaging program comprises four modules. The first module is a camera control module that contains the necessary functions and procedures for controlling the camera. The second module is a positioning module that contains the necessary functions for positioning and distance calculation. The third module is a database module that contains the necessary functions for reading and storing data. The fourth module is a retroreflection calculation module that contains functions for calculating retroreflection directly from the material provided by the camera.

When making road marking measurements, it is possible to simultaneously search from the database information on the roads and their sections, such as geographical information, or to enter new road information without needing to interrupt the photographing or loosing the image connection to the camera. During the measurement, the program calculates the distance from the beginning of the road section. The geographical information comprises the road register address containing the road, section, distance, and coordinate data. The results of the retroreflection calculation and the geographical information are stored in a text file. The images are stored in a separate folder on the hard disk of the computer. The image interpretation program interprets from the images the location of the road marking in the image and calculates the surface area and width of the intact sections of the road marking. It is also possible to measure the length of the marking, the dashed line interval and the surface area by inserting measuring points into the image. The image interpretation program reads the file produced by the imaging program on the images, interprets the images and stores the measuring results approved by the user into the database.

The main tasks of the measuring program are, thus, to produce an image of the road marking, and to make measurements from the images, and to position. When producing an image of the road marking, its retroreflection is also measured. At the same time, geographical information is stored as a road register address and geographical coordinates. The surface area and width of the road marking is calculated from the images. It is also possible to calculate the length of the marking and the length of the distance between the markings.

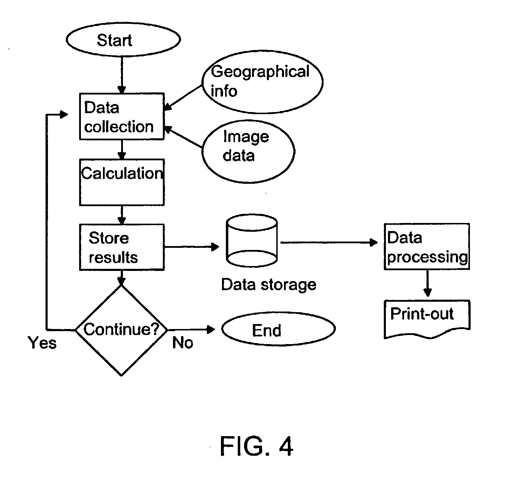

Figure 4 shows a flow chart of the measuring event. At the beginning of the measurements, the measuring equipment is assembled and the imaging program is started. The camera and the GPS locator are switched on, whereby geographical information and image data is produced by the data collection block. Retroreflection and the surface area and width of the marking are determined in the calculation block. When an image is produced of the road marking, the image and measuring result of the image is stored with the geographical information into the memory of the computer. The results can either be printed directly on a display or on paper or they can be stored in a data storage before data processing and printing.

If the measured information and images need to be loaded into a data storage, a database browser is started. The program checks that the measuring file is to be added to the database. The information in the data storage can also later be browsed and processed if desired. The surface area information, for instance, can later be interpreted from the information stored in the data storage.

Retroreflection is measured when the image is produced. This way, the camera settings can be adjusted immediately during measuring, thus speeding up the measuring. Only the highest luminance is then detected from the crosswise rows in the middle of the image. If the highest luminance does not sufficiently differ from the average luminance, no calculation is made. Retroreflection is measured for instance from the eight middle crosswise pixel rows of the image matrix. Each pixel has its own R, G, and B values. The pixel rows are summed by calculating the average of the pixel row. The pixel values obtained from this row are divided into sets of 20 pixels and the averages of the sets are calculated. The location of the highest R+G+B numerical value is established. Luminance is calculated on the basis of the R, G, and B values obtained from this location by using formula 1 described above. After this, additional light is switched on and the same measurement is repeated. The difference of the luminance with both additional light and without light is calculated from the obtained luminance values. This is the change in luminance produced by the additional light. The obtained result is divided at the measuring point by the illuminance of the additional illuminator, whereby retroreflection is obtained from the result. In practice, retroreflection is thus determined from two photographs taken at substantially the same location. First a photograph is taken without illuminating the target with illuminator 1. After this, the illuminator 1 is switched on and a second photograph is taken. Retroreflection can also be determined from one photograph, if the illuminator produces a thin strip of light. The luminance is then measured at the point illuminated by the strip of light and above and/or below it.

The road marking is identified from the differences in luminance in the image. The road marking is brighter than asphalt. The road marking is identified for instance from 20 transverse image rows in the manner described in connection with Figures 2 and 3. When measuring the border line, only the single white line is concentrated on. When measuring the centre line, not only the location is identified, but also the colour of the marking, and whether the marking is a double line. The colour is identified as either yellow or white depending on the ratio of blue to red. Colour coordinates are calculated from the prevailing colour and they are empirically compared with limit values. The comparison with limit values thus determines the colour. The program shifts to identifying a double line, if the marking is wider than normal. If there is a darker area in the middle of the identified wide marking, the marking is a double line, and the program shifts to identifying the inner edges. The inner edges of both lines are then identified.

The surface area of the road marking is measured inside the edges identified in the image coordinate system. As reference values, samples are selected from the asphalt beside the road marking. An average for the sum of the R, G, and B values of one pixel is calculated from the samples. When the reference value is calculated, it can be compared with the sum of the R, G, and B values of the pixels inside the edges. If the numerical value is smaller or close enough to the reference value measured from asphalt, the road marking is worn at the location. If the numerical value is clearly higher than the reference value measured from asphalt, the location is in good condition. The pixel values are first calculated from the identified road marking at every tenth row, for instance. The surface area is given for instance as a percentage of good pixels as calculated from all pixels.

The length and width of the marking and the distance between the markings is measured from the image by setting the start and end of the marking into the image. Both the location of the starting point relative to the camera and the location of the end point are calculated from the image. The desired length can further be calculated on the basis of these values. The distance from the camera to the desired location in the image is calculated using trigonometry, the known quantities being the pixel size of the image cell, the elevation of the camera from the road surface, the distance of the intersection of the image axis and the road from the camera and the camera standard.

The measuring results of the image interpretation are stored into a text file and the images are stored in a specific folder on the hard disk of the measuring computer. So as to browse and process the measuring information, the information in the text file should be downloaded into the database. If the database is not created in the measuring computer or the database is copied elsewhere, the image files should be moved and the information indicating the location of the images in the database should be updated.

The drawings and the related description are only intended to illustrate the idea of the invention. The invention may vary in detail within the scope of the claims. The presented solution can easily be used in determining the condition of a new road marking. Further, the solution makes it possible to determine the contrast between the road marking and the road surface. With the contrast, it is possible to determine the condition of the road marking especially in view of road use during daylight. Collecting the information need not be done using a digital camera, but it is also possible to use a line camera or another suitable solution having a sensor with a sufficient number of detectors side by side. Further, the camera does not need to be a colour camera, but a black-and-white camera can also be used, if colour detection of the marking from the image is not a required property. In practice, the implementation does require, however, that the road marking can be positioned in the image or measuring point at nearly millimetre accuracy. In the positioning, it is also possible to utilize existing road registers, for instance, from which a connection to GPS positioning can be established. In the solution, it is also possible to form in the apparatus a program interpreting road markings from a digital image, which detects arrows, pedestrian crossings and other corresponding different road markings. Road signs, guide signs, and reflectors can further be detected from the digital image. It is also possible to measure retroreflection values of guides, road signs and reflectors with the apparatus. The apparatus can also contain two cameras. A camera can then be mounted on both sides of a vehicle, and measurements can be performed on both the centre line and border line at the same time. Two additional illuminators can then, if necessary, be arranged in the vehicle. Further, the apparatus can be connected to a painting car in such a manner that if the apparatus determines that the condition of the road marking is not sufficient, the painting devices of the painting car can be directed to paint, i.e. renew, the road marking.

## Claims

1. A method for determining the condition of road markings by directing a light beam to a measuring point (10) and detecting a ray reflecting from said measuring point (10), the method comprising measuring the retroreflection of the road marking, **characterized by** choosing measurement positions on the inside of the road marking, measuring an amplitude of the reflected ray at each said measurement positions and determining from said amplitude measurements the existing surface area of the road marking.

2. A method as claimed in claim 1, **characterized by** also measuring an amplitude of the reflected ray outside the road marking and comparing the measuring results from the inside and outside with each other to determine the existing surface area of the road marking.

3. A method as claimed in claim 2, **characterized by** determining a limit value from the outside measurements and comparing the results of the inside measurements with the determined limit value to determine the existing surface area of the marking.

4. A method as claimed in any one of the preceding claims, **characterized in that** the measurement of retroreflection and an amplitude of the reflected ray is made by producing a digital image and processing the information in the digital image.

5. A method as claimed in claim 4, **characterized by** producing at least one digital image without additional light and at least one digital image with additional light, and calculating retroreflection from said at least two different digital images.

6. A method as claimed in any one of the preceding claims, **characterized by** determining the contrast between the road marking and the road surface from the measurements.

7. A method as claimed in any one of the preceding claims, **characterized by** determining the width and/or length of the road marking from the measurements.

8. An apparatus for determining the condition of road markings, the apparatus comprising an illuminator (1), a sensor comprising several adjacent detectors, means for controlling the illuminator, and a data processing and controlling unit (5) with calculation means for determining the retroreflection of the road marking, **characterized in that** the data processing and control unit (5) also comprises means for determining the existing surface area of the road marking.

9. An apparatus as claimed in claim 8, **characterized in that** the apparatus comprises means for determining the brightness outside the road marking, and means for determining the brightness inside the road marking, and means for comparing the outside and inside measuring results to determine the existing surface area of the road marking.

10. An apparatus as claimed in claim 8 or 9, **characterized in that** the sensor comprising adjacent detectors is a digital camera (6).

11. An apparatus as claimed in any one of claims 8 to 10, **characterized in that** a GPS locator (8) is arranged to the apparatus.

12. An apparatus as claimed in any one of claims 8 to 11, **characterized in that** the apparatus is arranged to a moving vehicle (9).

13. A computer program product for controlling a data processing device in response to the execution of a program code of the computer program product in a processor of the data processing device, **characterized in that** the computer program product comprises a program code which, when executed in the processor of a computer, makes the computer process measuring results of a road marking, determine from the measuring results retroreflection of the road marking, and determine from the measurements the existing surface area of the road marking.

**Patentansprüche**

1. Verfahren zum Bestimmen des Zustands von Straßenmarkierungen, indem ein Lichtstrahl auf einen Messpunkt (10) gerichtet und ein von dem Messpunkt (10) reflektierter Strahl erfasst wird, wobei das Verfahren umfasst, die Rückstrahlung der Straßenmarkierung zu messen, **gekennzeichnet durch** Wählen von Messpositionen innerhalb der Straßenmarkierung, Messen einer Amplitude des reflektierten Strahls an jeder der Messpositionen und Bestimmen der bestehenden Oberfläche der Straßenmarkierung ausgehend von den Amplitudenmesswerten.

2. Verfahren nach Anspruch 1, **gekennzeichnet durch** ebenfalls Messen einer Amplitude des reflektierten Strahls außerhalb der Straßenmarkierung und miteinander Vergleichen der Messergebnisse von innerhalb und außerhalb, um die bestehende Oberfläche der Straßenmarkierung zu bestimmen.

3. Verfahren nach Anspruch 2, **gekennzeichnet durch** Bestimmen eines Grenzwerts aus den Messwerten von außerhalb und Vergleichen der Ergebnisse der Messwerte von innerhalb mit dem bestimmten Grenzwert, um die bestehende Oberfläche der Straßenmarkierung zu bestimmen.

4. Verfahren nach einem der vorhergehenden Ansprüche, **dadurch gekennzeichnet, dass** die Messung der Rückstrahlung und einer Amplitude des reflektierten Strahls erfolgt, indem ein digitales Bild hergestellt und die Information im digitalen Bild verarbeitet wird.

5. Verfahren nach Anspruch 4, **gekennzeichnet durch** Herstellen mindestens eines digitalen Bilds ohne zusätzliches Licht, und mindestens eines digitalen Bilds mit zusätzlichem Licht, und Berechnen der Rückstrahlung ausgehend von den mindestens zwei verschiedenen digitalen Bildern.

6. Verfahren nach einem der vorhergehenden Ansprüche, **gekennzeichnet durch** Bestimmen des Kontrastes zwischen der Straßenmarkierung und der Straßenoberfläche ausgehend von den Messwerten.

7. Verfahren nach einem der vorhergehenden Ansprüche, **gekennzeichnet durch** Bestimmen der Breite und/oder Länge der Straßenmarkierung ausgehend von den Messwerten.

8. Vorrichtung zur Bestimmung des Zustands von Straßenmarkierungen, wobei die Vorrichtung eine Lichtquelle (1), einen Sensor mit mehreren nebeneinander angeordneten Detektoren, Einrichtungen zum Steuern der Lichtquelle, und eine Datenverarbeitungs- und Steuereinheit (5) mit Recheneinrichtungen zur Bestimmung der Rückstrahlung der Straßenmarkierung umfasst, **dadurch gekennzeichnet, dass** die Datenverarbeitungs- und Steuereinheit (5) auch Einrichtungen umfasst, um die bestehende Oberfläche der Straßenmarkierung zu bestimmen.

9. Vorrichtung nach Anspruch 8, **dadurch gekennzeichnet, dass** die Vorrichtung Einrichtungen umfasst, um die Helligkeit außerhalb der Straßenmarkierung zu bestimmen, und Einrichtungen, um die Helligkeit innerhalb der Straßenmarkierung zu bestimmen, und Einrichtungen, um die Messergebnisse von innerhalb und außerhalb zu vergleichen, um die bestehende Oberfläche der Straßenmarkierung zu bestimmen.

10. Vorrichtung nach Anspruch 8 oder 9, **dadurch gekennzeichnet, dass** es sich bei dem Sensor, der nebeneinander angeordnete Detektoren umfasst, um eine Digitalkamera (6) handelt.

11. Vorrichtung nach einem der Ansprüche 8 bis 10, **dadurch gekennzeichnet, dass** ein GPS-Positionsgeber (8) an der Vorrichtung angeordnet ist.

12. Vorrichtung nach einem der Ansprüche 8 bis 11, **dadurch gekennzeichnet, dass** die Vorrichtung an einem sich fortbewegenden Fahrzeug (9) angeordnet ist.

13. Computerprogrammprodukt zum Steuern einer Datenverarbeitungsvorrichtung im Ansprechen auf den Ablauf eines Programmcodes des Computerprogrammprodukts in einem Prozessor der Datenverarbeitungsvorrichtung, **dadurch gekennzeichnet, dass** das Computerprogrammprodukt einen Programmcode umfasst, der beim Ablauf im Prozessor eines Computers den Computer Messergebnisse einer Straßenmarkierung verarbeiten, ausgehend von den Messergebnissen die Rückstrahlung der Straßenmarkierung bestimmen, und ausgehend von den Messwerten die bestehende Oberfläche der Straßenmarkierung bestimmen lässt.

**Revendications**

1. Procédé de détermination de l'état des marques routières en dirigeant un faisceau lumineux vers un point de mesure (10) et en détectant un rayonnement réfléchi en provenance dudit point de mesure (10), le procédé comprenant la mesure de la rétro-réflexion de la marque routière, **caractérisé en** choisissant des positions de mesures au niveau de l'intérieur de la marque routière, en mesurant une amplitude du rayonnement réfléchit à chaque dite position de mesure et en déterminant la surface existante de la marque routière à partir desdites amplitudes des mesures.

2. Procédé selon la revendication 1, **caractérisé par** mesurer également l'amplitude du rayonnement réfléchit à l'extérieur de la marque routière et par comparer les résultats mesurés à partir de l'intérieur et de l'extérieur les uns avec les autres pour déterminer la surface existante de la marque routière.

3. Procédé selon la revendication 2, **caractérisé par** la détermination d'une valeur limite à partir des mesures de l'extérieur et comparer les résultats des mesures de l'intérieur avec la valeur limite déterminée pour déterminer la surface existante de la marque routière.

4. Procédé selon l'une quelconque des revendications précédentes, **caractérisé en ce que** la mesure de la rétro-réflexion et d'une amplitude du rayonnement réfléchit est effectué en réalisant une image numérique et en traitant l'information dans l'image numérique.

5. Procédé selon la revendication 4, **caractérisé par** la réalisation d'au moins une image numérique sans lumière additionnelle et d'au moins une image numérique avec de la lumière additionnelle, et par le calcul de la rétro-réflexion à partir desdites au moins deux images numériques différentes.

6. Procédé selon l'une quelconque des revendications précédentes, **caractérisé par** la détermination du contraste entre la marque routière et la surface routière à partir des mesures.

7. Procédé selon l'une quelconque des revendications précédentes, **caractérisé par** la détermination de la largeur et/ou de la longueur de la marque routière à partir des mesures.

8. Appareil de détermination de l'état des marques routières, l'appareil comprenant un illuminateur (1), un capteur comprenant plusieurs détecteurs adjacents, des moyens de commande de l'illuminateur, et une unité de traitement et de commande (5) avec des moyens de calcul pour déterminer la rétro-réflexion, **caractérisé en ce que** l'unité de traitement et de commande comprend également des moyens pour déterminer la surface existante de la marque routière.

9. Appareil selon la revendication 8, **caractérisé en ce que** l'appareil comprend des moyens pour déterminer la brillance à l'extérieur de la marque routière, et des moyens pour déterminer la brillance à l'intérieur de la marque routière, et des moyens pour comparer les résultats des mesures de l'extérieur et de l'intérieur pour déterminer la surface existante de la marque routière.

10. Appareil selon la revendication 8 ou 9, **caractérisé en ce que** le capteur comprenant des détecteurs adjacents est une caméra numérique (6).

11. Appareil selon l'une quelconque des revendication 8 à 10, **caractérisé en ce que** un localisateur GPS (8) est agencé sur l'appareil.

12. Appareil selon l'une quelconque des revendication 8 à 11, **caractérisé en ce que** l'appareil est agencé sur un véhicule mobile (9).

13. Produit de programme informatique pour commander un dispositif de traitement de données en réponse à l'exécution d'un code de programme du programme d'ordinateur dans un processeur du dispositif de traitement de données, **caractérisé en ce que** le produit de programme informatique comprend un code de programme qui, lorsqu'il est exécuté avec le processeur d'un ordinateur, fait que l'ordinateur traite les résultats mesurés de la marque routière, détermine à partir des résultats mesurés la rétro-réflexion de la marque routière, et détermine à partir des mesures la surface existante de la marque routière.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6407674 B
- US 20020063638 A
- GB 2372314 A
- US 4721389 A